# EUROPÄISCHE PATENTANMELDUNG

(11) **EP 2 527 700 A1**
(43) Veröffentlichungstag der Anmeldung: **28.11.2012**
(21) Anmeldenummer: 12168786.7
(22) Anmeldetag: 22.05.2012
(51) Int. Cl.: F16K 31/40

(54) **Ventil**

(30) Priorität: 24.05.2011 DE 102011050617
(71) Anmelder: A. u. K. Müller GmbH & Co. KG, 40595 Düsseldorf (DE)
(72) Erfinder:
(74) Vertreter: Feder Walter Ebert

(57) **Zusammenfassung**

Die Erfindung betrifft ein Ventil mit einem über eine Membrane (3) schließbaren Ventilsitz (2) und einem Pilotventil (4), welches zur Betätigung der Membrane (3) über ein in einem Pilotgehäuse (41) bewegbares Schließelement (42) eine Druckentlastungsöffnung (43) steuert, wobei dass das Pilotgehäuse (41) über eine Pilotmembrane (44) abgedichtet ist.

## Beschreibung

Die Erfindung betrifft ein Ventil mit einem über eine Membrane schließbaren Ventilsitz und einem Pilotventil, welches zur Betätigung der Membrane über ein in einem Pilotraum bewegbares Schließelement eine Druckentlastungsöffnung steuert.

Derartige Ventile werden in vielen Bereichen der Technik, beispielsweise in sanitären Einrichtungen, in Getränkeautomaten oder ähnlichen Vorrichtungen zur Steuerung von Fluidströmen und insbesondere von Wasserströmen verwendet.

Der zu steuernde Fluidstrom wird über einen Einlauf in das Ventil geführt, welches einen über eine Membrane schließbaren Ventilsitz aufweist, der mit dem Auslauf des Ventils strömungsverbunden ist. Bei Betätigung der Membrane mittels eines Pilotventils hebt diese von dem Ventilsitz ab und gibt auf diese Weise den Strömungsweg zwischen dem Einlauf und dem Auslauf frei.

Bei eigenmediumbetätigten Ventilen erfolgt das Öffnen und Schließen des Ventilsitzes über die Membrane über den Druck des in dem Ventil strömenden Fluids. Hierzu wird das Fluid in einen Druckraum auf der dem Ventilsitz gegenüberliegenden Seite der Membrane geführt, so dass diese sich unter dem Druck des Fluids dichtend gegen den Ventilsitz legt. Über das Pilotventil kann dann eine Druckentlastungsöffnung des Druckraums angesteuert werden. Durch Öffnen der Druckentlastungsbohrung fällt der Druck in dem Druckraum ab und die Membrane hebt sich von dem Ventilsitz ab, so dass der Strömungsweg für das einströmende Fluid von dem Einlauf über den Ventilsitz hin zum Auslauf freigegeben wird.

Bei bekannten Ventilen mit einem solchen Pilotventil ist vorgesehen, dass die Bauteile des Pilotventils, wie etwa ein zum Öffnen bzw. Verschließen der Druckentlastungsöffnung bewegbares Schließelement, in einem Pilotventilraum angeordnet sind und von dem im Druckraum befindlichen Fluid nach Öffnen der Druckentlastungsbohrung umströmt werden.

Eine derartige Konstruktion hat sich in der Vergangenheit zwar durchaus bewährt, weist jedoch insbesondere im Bereich von Trinkwasseranwendungen gewisse Nachteile auf. Denn in dem Pilotraum bildet sich in Bereichen geringer Strömungsgeschwindigkeiten häufig Stagnationswasser, welches selbst nach mehrfacher Betätigung des Ventils nicht vollständig ausgespült wird. In solchen Bereichen besteht unter ungünstigen Umständen die Gefahr, dass sich Verkeimungen bilden können, was für Trinkwasseranwendungen von Nachteil ist.

A u f g a b e der Erfindung ist es, ein Ventil anzugeben, bei welchem die Gefahr einer solchen Verkeimung reduziert ist.

Diese Aufgabe wird bei einem Ventil der eingangs genannten Art dadurch g e - löst , dass der Pilotraum über eine Pilotmembrane abgedichtet ist.

Über die Pilotmembrane kann eine Abdichtung des Pilotraums gegenüber dem die Druckausgleichsöffnung durchströmenden Fluid erreicht werden. Der Pilotraum und die in diesem liegenden Bauteile des Pilotventils liegen in einem trockenen Bereich, so dass die Gefahr einer Stagnationswasserbildung innerhalb des Ventils und damit die Gefahr einer Verkeimung des Fluids deutlich verringert wird.

In vorteilhafter Ausgestaltung der Erfindung wird vorgeschlagen, dass die Pilotmembrane in Ihrem Randbereich dichtend gegenüber dem Pilotraum festgelegt ist. Die Randbereiche der Membrane können als Dichtung ausgebildet sein und derart gegen den Pilotraum verspannt sein, dass dieser auch bei größeren Mediendrücken zuverlässig abgedichtet wird. Beispielsweise kann der Randbereich der Pilotmembrane als ein einstückig an die Pilotmembrane angeformter O-Ring-Bereich ausgebildet sein.

Eine weitere Ausgestaltung sieht vor, dass die Pilotmembrane in einem Mittelbereich mit dem Schließelement verbunden ist. Durch die Verbindung des Schließelements mit dem Mittelbereich der Pilotmembrane folgt der Mittelbereich der Pilotmembrane den Bewegungen des Schließelements. Der Mittelbereich der Pilotmembrane kann die Druckentlastungsöffnung daher schließen oder öffnen.

Von konstruktivem Vorteil ist in diesem Zusammenhang eine Ausgestaltung, bei welcher das schließseitige Ende des Schließelements formschlüssig mit der Pilotmembrane verbunden ist. Bei dem Schließelement handelt es sich vorzugsweise um ein stempelförmiges Druckstück, welches formschlüssig in einen Hinterschnitt der aus einem Elastomerwerkstoff bestehenden Pilotmembrane eingreift. Die Verbindung zwischen dem Schließelement und der Pilotmembrane kann nach Art einer Steckverbindung ausgestaltet sein.

Von konstruktivem Vorteil ist ferner eine Ausgestaltung, nach welcher das Schließelement über eine Feder in Richtung der Schließstellung des Pilotventils vorgespannt ist. Die Feder ist dabei derart auszulegen, dass diese die Druckentlastungsöffnung bei den zu erwartenden Drücken, beispielsweise Drücken von bis zu 10 bar, zuverlässig verschlossen hält.

Eine hygienisch vorteilhafte, da wenig Stagnationsvolumen bedingende Ausgestaltung sieht ferner vor, dass die Druckentlastungsöffnung über einen Entlastungskanal mit dem Auslauf des Ventils verbunden ist. Über den Druckentlastungskanal kann das sich in dem Druckraum befindende Fluid nach Öffnen der Druckentlastungsbohrung entlang eines vorgegebenen, eng kanalisierten Wegs in Richtung des Auslaufs des Ventils strömen.

Von Vorteil ist in diesem Zusammenhang eine Ausgestaltung, bei welcher der Entlastungskanal als eine Bohrung ausgebildet ist. Der Durchmesser der Bohrung kann an den Durchmesser der Druckentlastungsöffnung derart angepasst sein, dass sich eine den gesamten Strömungsquerschnitt nutzende Durchströmung des Entlastungskanals ergibt. Bei jeder Betätigung des Ventils werden auf diese Weise sämtliche noch von dem vorhergehenden Betätigungsvorgang stammenden Fluidanteile aus dem Entlastungskanal ausgespült, wodurch die Gefahr einer Keimwasserbildung deutlich reduziert wird.

Zur Vermeidung von Stagnationswasser wird in weiterer Ausgestaltung ferner vorgeschlagen, das der Entlastungskanal die einzige Strömungsverbindung zwischen der Druckentlastungsöffnung und dem Auslauf bildet. Auf diese Weise wird das über die Druckentlastungsöffnung strömende Fluid ausschließlich über den Entlastungskanal geführt. Bei nochmaliger Betätigung des Ventils wird das bei der letzten Ventilbetätigung in den Kanal verbliebene Fluid ausgespült, so dass die Gefahr einer Verkeimung durch länger in dem Ventil stehendes Fluid verringert wird.

Von konstruktiven Vorteil ist eine Ausgestaltung, nach welcher der Entlastungskanal von der Pilotventilseite der Membrane her kommend seitlich um den Ventilsitz herum zum Auslauf geführt ist.

Um ein Rückströmen von Fluid, beispielsweise im Falle von Druckschwankungen im Leitungssystem zu verhindern, wird in weiterer Ausgestaltung vorgeschlagen, dass der Entlastungskanal ein Rückschlagventil aufweist. Das Rückschlagventil kann beispielsweise nach Art eines federbelasteten Schließelements ausgeführt sein, welches den Strömungsweg in der einen Richtung entgegen der Kraft einer sich spannenden Feder freigibt, diesen in der entgegensetzten Richtung jedoch blockiert.

Schließlich wird vorgeschlagen, dass das Ventil einen Einschraubbereich aufweist, über welchen das Ventil in eine Gewindebohrung einschraubbar ist, wobei der Einschraubbereich über ein Dichtelement gegenüber dem Einlauf des Ventils abgedichtet ist. Durch das Dichtelement wird vermieden, dass sich im Bereich des Gewindes Stagnationswasser bildet.

Weitere Einzelheiten und Vorteile eines erfindungsgemäßen Ventils werden nachfolgend unter Zuhilfenahme der beigefügten Zeichnungen eines Ausführungsbeispiels erläutert werden. Darin zeigen:
- Fig. 1: ein erfindungsgemäßes Ventil in dessen Schließstellung in teilweise geschnittener Seitenansicht,
- Fig. 2: eine Darstellung des Ventils gemäß Fig. 1 in einer anderen Schnittansicht,
- Fig. 3: in vergrößerter Ansicht Einzelheiten des Pilotventils und
- Fig. 4: eine der Darstellung in Fig. 2 entsprechende Darstellung des Ventils, wobei dieses in eine Armatur eingeschraubt ist.

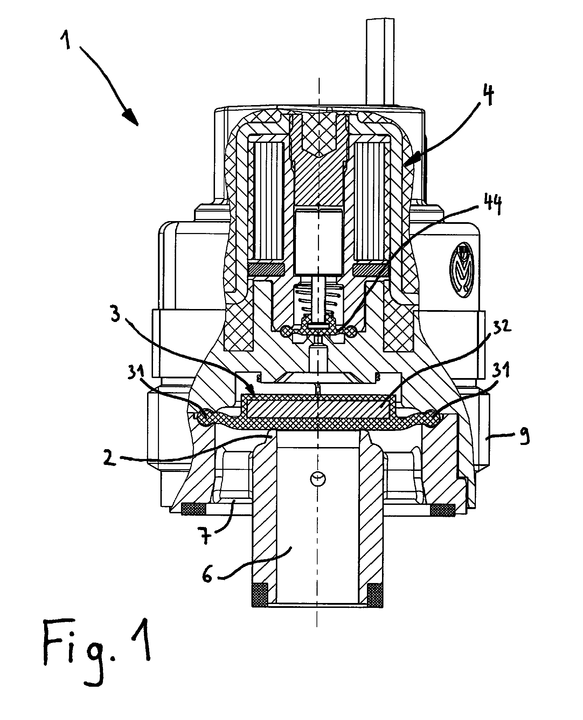

Fig. 1 zeigt in teilweise geschnittener Seitenansicht ein als Kartuschenventil ausgebildetes Ventil 1, bei welchem es sich um ein eigenmediumbetätigtes Servoventil handelt, dessen Aufbau und Funktionsweise zunächst allgemein anhand der Darstellungen in Fig. 1 beschrieben werden.

Das Ventil 1 weist einen Einlauf 7 auf, der über einen ringzylindrischen Ventilsitz 2 mit einem Auslauf 6 strömungsverbunden ist. Der Einlauf 7 und der Auslauf 6 sind koaxial zueinander angeordnet, wobei im Bereich des Einlaufs 7 ein Sieb zum Zurückhalten von Verunreinigungen, Schmutzpartikeln usw. vorgesehen sein kann.

Fig. 1 zeigt das Ventil 1 in dessen Schließstellung, in welcher der Ventilsitz 2 über eine bewegbare Membrane 3 abgedichtet ist, so dass der Strömungsweg vom Einlauf 7 hin zum Auslauf 6 blockiert ist.

Die Membrane 3 ist in ihrem Randbereich über einen Dichtabschnitt 31 in dem Gehäuse des Ventils 1 unter Klemmwirkung dichtend festgelegt. Bei dem Dichtabschnitt 31 handelt es sich um einen einstückig mit der Membrane 3 verbunden O-Ring-Abschnitt. In deren Mittelbereich weist die Membrane 3 einen die Membrane 3 versteifenden Körper 32 aus einem Kunststoffmaterial auf, der in die im Übrigen aus einem Gummimaterial bestehende Membrane 3 eingebettet ist.

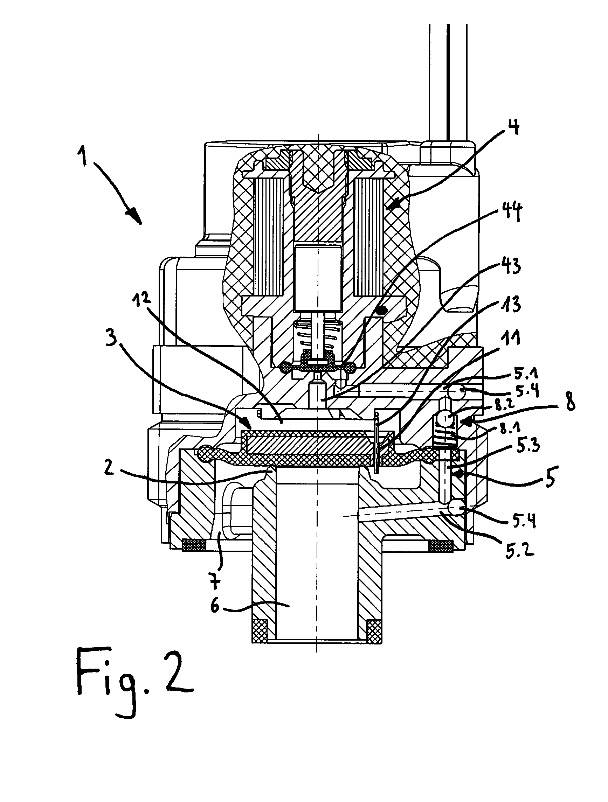

Über den Einlauf 7 tritt das Fluid mit einem Druck von beispielsweise 0,2 bis 10 bar in das Innere des Ventils 1 ein. Über eine in der Membrane 3 vorgesehene, seitlich des Ventilsitzes 2 angeordnete Öffnung 11 tritt das Fluid in einen Druckraum 12 ein, vgl. Fig. 2. Innerhalb der Öffnung 11 ist ein bürstenartiges Reinigungselement 13 vorgesehen, welches die Öffnung 11 bei jeder Bewegung der Membrane 3 beispielsweise von Kalkablagerungen und ähnlichen Verunreinigungen reinigt, so dass stets eine Strömungsverbindung zwischen dem Einlauf 7 und dem Druckraum 12 besteht.

Der Druckraum 12 ist auf der dem Ventilsitz 2 gegenüberliegenden Seite der Membrane 3 angeordnet und befindet sich auf dem gleichen Druckniveau wie der Einlauf 7. Da der Druck innerhalb des Einlaufs 7 bzw. des Druckraums 12 höher ist als jener des Auslaufs 6 wird die Membrane 3 unter dem Einfluss des eigenen Mediums von oben her auf den Ventilsitz 2 gedrückt.

Um den Strömungsweg zwischen dem Einlauf 7 und dem Auslauf 6 über den Ventilsitz 2 freizugeben, ist es erforderlich, den Druck innerhalb des Druckraums 12 abzusenken, so dass die Membrane 3 unter dem Einfluss des über den Einlauf 7 von unten her anliegenden Drucks von dem Ventilsitz 2 abhebt. Hierzu ist eine Druckentlastungsöffnung 43 vorgesehen, die nach Art einer sich düsenartig verjüngenden Bohrung ausgebildet ist und über das Pilotventil 4 gesteuert, d. h. geschlossen oder geöffnet werden kann.

Nach Öffnen der Druckausgleichsöffnung 43 fällt der Druck innerhalb des Druckraums 12 ab und das innerhalb des Druckraums 12 befindliche, oftmals auch als Pilotwasser bezeichnete Fluid entweicht einem Druckgefälle folgend über die Druckausgleichsöffnung 43 und den dieser strömungstechnisch nachgeschalteten Entlastungskanal 5 in Richtung des Auslaufs 6. Durch den Druck des über den Einlauf 7 einströmenden, sich unterhalb der Membrane 3 stauenden Fluids hebt die Membrane 3 in Richtung des druckfreien Druckraums 12 von dem Ventilsitz 2 ab und gibt auf diese Weise den direkten Strömungsweg zwischen dem Einlauf 7 und dem Auslauf 6 frei. In dieser Stellung ist das Ventil 1 geöffnet.

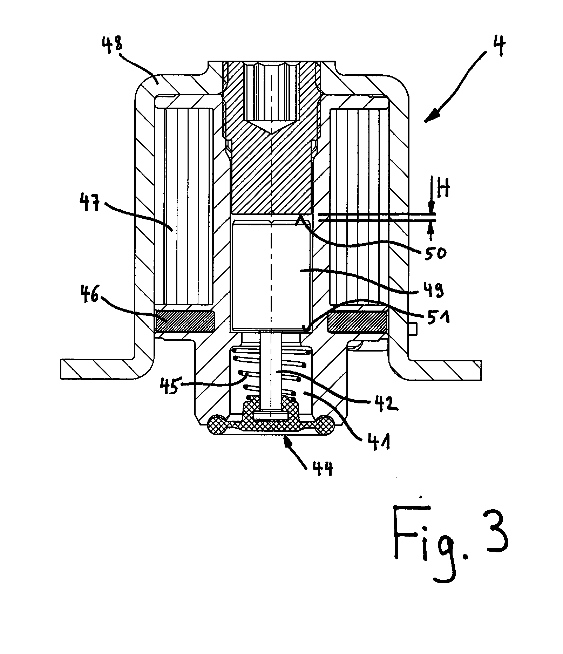

Nachfolgend wird zunächst auf Einzelheiten des Pilotventils 4 auch unter Bezugnahme auf die Darstellung in Fig. 3 eingegangen werden.

Das Pilotventil 4 weist ein axial bewegbares Schließelement 42 auf, welches gegenüber der Druckentlastungsöffnung 43 hin und her bewegt werden kann, wodurch diese geöffnet oder geschlossen werden kann. Um das Schließelement 42 in Bewegung zu setzen, ist ein Permanentmagnet 46 sowie eine elektrisch bestrombare Spule 47 vorgesehen, über welche das Schließelement 42 zwischen der Offenstellung und der Schließstellung hin- und herbewegt werden kann. Der Permanentmagnet 46 und die Spule 47 sind innerhalb eines jochförmigen Gehäuses 48 angeordnet und sind derart ausgelegt, dass ein innerer Magnetanker 49 durch kurzzeitige Bestromung der Spule 47 zwischen zwei Anschlägen 50, 51 hin und her bewegt werden kann. Das Schließelement 42 ist mit dem Anker 49 gekoppelt, so dass der Hub H des Ankers 49 zum Öffnen bzw. Schließen der Druckausgleichsöffnung 43 auf das Schließelement 42 übertragen wird. Insoweit handelt es sich bei dem Pilotventil 4 um ein bistabiles Magnetventil, dessen oftmals auch als Plunger bezeichnetes Schließelement 42 durch kurzzeitiges Bestromen der Spule 47 zwischen zwei stabilen Endstellungen hin- und herbewegbar ist.

Am stirnseitigen Ende des Schließelements 42 ist eine Pilotmembrane 44 angeordnet, welche den oberhalb der Pilotmembrane 44 vorgesehenen Pilotventilraum 41 gegenüber dem in dem Ventil 1 strömenden Fluid bzw. dem in diesem Bereich strömenden Pilotwasser abdichtet. Der Pilotventilraum 41 wird über die Pilotmembrane 44 derart abgedichtet, dass dieser stets trocken bleibt.

Die Pilotmembrane 44 ist in deren Randbereich mit einem O-Ring-förmigen Dichtbereich versehen, welcher das Innere des Pilotraums 41 unter Klemmwirkung abdichtet. Auf der der Druckentlastungsbohrung 43 gegenüberliegenden Seite der Pilotmembrane 44 ist diese in einem Mittelbereich nach Art einer Steckverbindung formschlüssig mit dem stirnseitigen Ende des Schließelements 42 verbunden. Auf diese Weise wird sicher gestellt, dass die Pilotmembrane 44 bzw. deren Mittelbereich den Bewegungen des Schließelements 42 folgt und die Druckentlastungsöffnung 43 geöffnet oder verschlossen hält.

Im Inneren des Pilotventilraums 41 ist eine als konische Spiralfeder ausgebildete Feder 45 zu erkennen, welche das Schließelement 42 und mit diesem die Pilotmembrane 44 in Richtung deren Schließstellung mit einer Kraft vorspannt.

Die Feder 45 ist derart dimensioniert, dass diese die Druckentlastungsbohrung 43 bei den innerhalb des Ventils 1 auftretenden Drücken zuverlässig geschlossen hält.

Bei Bestromung der Spule 47 wird das Schließelement 42 entgegen der Kraft der Feder 45 und unter Verformung der seitlich eingespannten Pilotmembrane 44 von der in Fig. 3 bzw. Fig. 1 dargestellten Schließstellung um den Hub H in eine höher liegende Offenstellung bewegt. Aufgrund der bistabilen Ausbildung des Pilotventils 4 nimmt das Schließelement 42 auch in dieser Stellung eine stabile Lage ein. Durch erneutes Bestromen der Spule 47 wird das Schließelement 42 und mit diesem die Pilotmembran 44 über die Kraft der Feder 45 wieder in Richtung der Druckentlastungsbohrung 43 bewegt.

Durch die Pilotmembrane 44 wird der Pilotraum 41 von dem aus dem Druckraum 12 austretenden, auch als Pilotwasser bezeichneten Fluid abgeschirmt. Es ist nicht möglich, dass Pilotwasser in das Innere des Pilotraums 42 eintritt, dort längere Zeit stehen bleibt und ggf. verkeimt, wodurch die Qualität des durch das Ventil 1 strömenden Fluids unter hygienischen Gesichtspunkten deutlich verbessert wird.

Ebenfalls zur Verbesserung der Hygieneeigenschaften des durch das Ventil 1 strömenden Fluids trägt der sich an die Druckentlastungsöffnung 43 anschließende Druckentlastungskanal 5 bei, was nachfolgend insbesondere anhand der Darstellung in Fig. 2 näher erläutert werden wird.

Im Gegensatz zu aus dem Stand der Technik bekannten Ventil, bei welchem das Pilotwasser oftmals im gesamten Umfangsbereich der Membrane 3 in Richtung des Auslaufs 6 zurückgeführt wird, wird bei dem als Bohrung ausgeführten Druckentlastungskanal 5 stets eine Bohrung geringen Durchmessers mit hoher Strömungsgeschwindigkeit durchströmt. Bei jeder Betätigung des Ventils 1 findet ein Austausch des in dem Strömungskanal 5 stehen gebliebenen bzw. die Wände des Strömungskanals benetzenden Fluids statt, so dass auch insoweit die Gefahr länger stehenden und damit verkeimenden Fluids deutlich reduziert wird.

Wie die Zusammenschau der Fign. 1 und 2 erkennen lässt, bildet der Entlastungskanal 5 die einzige Strömungsverbindung zwischen der Druckentlastungsöffnung 43 und dem Auslauf 6. Der Strömungskanal 5 besteht aus zwei sich im Wesentlichen parallel zu der Membrane 3 erstreckenden Abschnitten 5.1, 5.3 sowie einem sich im Wesentlichen Vertikal gegenüber der Membrane 3 erstreckenden Abschnitt 5.2, der die beiden Abschnitte 5.1, 5.3 seitlich des Ventilsitzes miteinander verbindet. Aus fertigungstechnischen Gründen sind die Abschnitte 5.1 und 5.3 zur Seite des Ventils 1 hin offen ausgebildet und über stopfenartige Dichtelemente 5.4 verschlossen.

Wie die Darstellung in Fig. 2 weiter erkennen lässt weist der Entlastungskanal 5 in dessen Abschnitt 5.2 ein Rückschlagventil 8 bestehend aus einer Feder 8.1 und einem Schließelement 8.2 auf. Das Rückschlagventil 8 ist derart ausgebildet, dass es eine Durchströmung des Entlastungskanals 5 von der Entlastungsbohrung 43 her kommend erlaubt, den umgekehrten Strömungsweg jedoch blockiert.

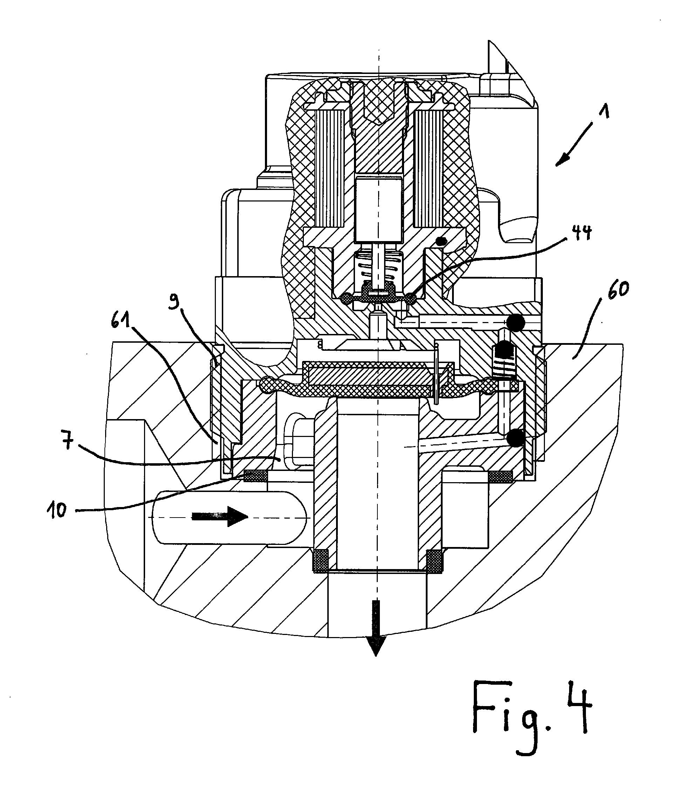

Fig. 4 zeigt schließlich eine Einbausituation des Ventils 1, welches über einen als Außengewinde ausgebildeten Einschraubbereich 9 in ein entsprechendes Innengewinde 61 einer Armatur 60 eingeschraubt ist. Die Richtung des strömenden Fluids ist in Fig. 4 durch Pfeile gekennzeichnet und es lässt sich erkennen, dass der Einschraubbereich 9 des Ventils 1 über ein ringförmiges Dichtelement 10 gegenüber dem Einlauf 7 des Ventils 1 abgedichtet ist. Auf diese Weise wird das in dem Ventil 1 strömende Fluid von dem Einschraubbereich 9 abgeschirmt. Auch dies ist unter hygienischen Gesichtspunkten Vorteilhaft, da sich innerhalb des Einschraubbereichs 9 kein Stagnationswasser sammeln kann.

Das vorstehend beschrieben Ventil zeichnet sich durch eine wenig Stauräume aufweisende Konstruktion aus. Stagnationswasserbildung und die damit verbundene Gefahr einer Bildung verkeimten Wassers werden deutlich reduziert.

### Bezugszeichen:

- 1: Ventil
- 2: Ventilsitz
- 3: Membrane
- 4: Pilotventil
- 5: Entlastungskanal
- 5.1: Abschnitt
- 5.2: Abschnitt
- 5.3: Abschnitt
- 5.4: Dichtelement
- 6: Auslauf
- 7: Einlauf
- 8: Rückschlagventil
- 9: Einschraubbereich
- 10: Dichtelement
- 11: Öffnung
- 12: Druckraum
- 13: Reinigungselement

- 31: Dichtabschnitt
- 32: Körper

- 41: Pilotventilraum
- 42: Schließelement
- 43: Druckentlastungsbohrung
- 44: Pilotmembrane
- 45: Feder
- 46: Permanentmagnet
- 47: Spule
- 48: Gehäuse
- 49: Anker
- 50: Anschlag
- 51: Anschlag

- 60: Armatur
- 61: Gewinde

- H: Hub

## Patentansprüche

1. Ventil mit einem über eine Membrane (3) schließbaren Ventilsitz (2) und einem Pilotventil (4), welches zur Betätigung der Membrane (3) über ein in einem Pilotraum (41) bewegbares Schließelement (42) eine Druckentlastungsöffnung (43) steuert,
**dadurch gekennzeichnet,**
**dass** der Pilotraum (41) über eine Pilotmembrane (44) abgedichtet ist.

2. Ventil nach Anspruch 1, **dadurch gekennzeichnet, dass** die Pilotmembrane (44) in ihrem Randbereich dichtend gegenüber dem Pilotraum (41) festgelegt ist.

3. Ventil nach Anspruch 1 oder Anspruch 2, **dadurch gekennzeichnet, dass** die Pilotmembrane (44) in einem Mittelbereich mit dem Schließelement (42) verbunden ist.

4. Ventil nach Anspruch 3, **dadurch gekennzeichnet, dass** das schließseitige Ende des Schließelements (42) formschlüssig mit der Pilotmembrane (44) verbunden ist.

5. Ventil nach einem der vorhergehenden Ansprüche, **dadurch gekennzeichnet, dass** das Schließelement (42) über eine Feder (45) in Richtung der Schließstellung des Pilotventils (4) vorgespannt ist.

6. Ventil nach einem der vorhergehenden Ansprüche, **dadurch gekennzeichnet, dass** die Druckentlastungsöffnung (43) über einen Entlastungskanal (5) mit dem Auslauf (6) des Ventils verbunden ist.

7. Ventil nach Anspruch 6, **dadurch gekennzeichnet, dass** der Entlastungskanal (5) als eine Bohrung ausgebildet ist.

8. Ventil nach Anspruch nach Anspruch 7, **dadurch gekennzeichnet, dass** der Entlastungskanal (5) die einzige Strömungsverbindung zwischen der Druckentlastungsöffnung (43) und dem Auslauf (6) bildet.

9. Ventil nach einem der Ansprüche 6 bis 8, **dadurch gekennzeichnet, dass** der Entlastungskanal (5) von der Pilotventilseite der Membrane (3) her kommend seitlich um den Ventilsitz (2) herum zum Auslauf (6) geführt ist.

10. Ventil nach einem der Ansprüche 6 bis 9, **dadurch gekennzeichnet, dass** der Entlastungskanal (5) ein Rückschlagventil (8) aufweist.

11. Ventil nach einem der vorhergehenden Ansprüche, **gekennzeichnet durch** einen Einschraubbereich (9), über welchen das Ventil in eine Gewindebohrung einschraubbar ist, wobei der Einschraubbereich (9) über ein Dichtelement (10) gegenüber dem Einlauf (7) des Ventils abgedichtet ist.
